# FASCICULE DE BREVET EUROPEEN

(11) **EP 1 018 792 B1**
(45) Date de publication et mention de la délivrance du brevet: **04.02.2009**
(21) Numéro de dépôt: 99403158.1
(22) Date de dépôt: 16.12.1999
(51) Int. Cl.: H02H 7/18

(54) **Protection pour module de batterie avec mémorisation par diode**
Batteriemodulschutz mit Diode zur Speicherung
Protection for battery pack with diode for memorizing

(30) Priorité: 07.01.1999 FR 9900088
(43) Date de publication de la demande: 12.07.2000
(73) Titulaire: SAFT GROUPE SA, 93170 Bagnolet (FR)
(72) Inventeur: Perelle, Michel, 37210 Parcay-Mesla (FR); Planchat, Jean-Pierre, 86280 Saint-Benoit (FR); Rigobert, Gérard, 86000 Poitiers (FR); Souliac, Laurent, 86280 Saint Benoit (FR)
(74) Mandataire: Pochart, François

(56) Documents cités:
- EP-A- 0 372 823
- FR-A- 2 778 281
- US-A- 5 625 273

## Description

La présente invention a pour objet un module pour batterie, comprenant au moins un élément électrochimique, et au moins un capteur de dysfonctionnement d'un ou plusieurs des éléments électrochimiques.

L'invention concerne la protection des éléments de batterie contre les dysfonctionnements, tels que les surpressions pour les éléments scellés, les températures excessives, les surtensions, ou les sous-tensions, les courts-circuits, et autres.

Le document US-A-5 625 273 décrit un circuit de protection pour une batterie d'élements électrochimiques. Le circuit comprend des capteurs pour détecter le dysfonctionnement de la batterie et un interrupteur électronique comprenant un un transistor de puissance ouvert en cas de dysfonctionnement. Le circuit décrit dans ce document ne permet pas de court-circuiter des élements électrochimique.

Le document EP-A-0 372 823 décrit un circuit de dérivation de cellule électrochimique qui comprend une diode montée en parallèle à la cellule, un interrupteur thermique activé par la diode, un relais et un fusible. L'activation de l'interrupteur provoque la fermeture du relais qui place la cellule en court-ciruit.

Le document FR-A-2778281 (publié le 05.11.1999) décrit un module de batterie, comprenant des éléments électrochimiques, avec au moins un capteur, un fusible monté en série avec les éléments électrochimiques, et un interrupteur électronique commandé par le capteur et qui ferme le montage série des éléments et du fusible. Cette demande mentionne à titre d'exemple d'interrupteurs électroniques les transistors, thyristor, IGBT ou MOS.

L'invention propose un tel interrupteur électronique. Elle fournit ainsi une solution au problème de la protection d'un module pour batterie, à l'aide d'un coupe-circuit disposé dans ou sur le module, et notamment propose une solution au problème de la protection d'un module, sans augmentation de sa résistance interne.

L'invention assure la fonction de mémorisation décrite dans la demande française susmentionnée, de façon simple et efficace. Elle permet ainsi que le module reste conducteur, même après que les éléments électrochimiques ont été isolés.
Plus précisément, l'invention propose un module pour batterie selon la revendication 1.

La diode peut être reliée à la grille du transistor de commande par l'intermédiaire d'une résistance.

Dans un autre mode de réalisation, le module comprend un condensateur retardant l'application d'une tension à la grille du transistor de commande.

Avantageusement, le module comprend une diode Zener limitant la tension appliquée à la grille du transistor de commande.

De préférence, les capteurs comprennent un pressostat. Ils peuvent aussi comprendre un pressostat pour chaque élément électrochimique.

Dans un mode de réalisation, les capteurs comprennent un capteur de surtension. On peut prévoir un capteur de surtension aux bornes de chaque élément électrochimique.

Dans un mode de réalisation, les capteurs commandent des commutateurs ouverts en fonctionnement normal des éléments électrochimiques, montés en parallèle, le montage série d'une résistance et des commutateurs est monté en parallèle aux bornes des éléments électrochimiques, et la grille du transistor de commande est reliée entre ladite résistance et les dits capteurs.

Dans un autre mode de réalisation, les capteurs commandent des commutateurs fermés en fonctionnement normal des éléments électrochimiques, montés en série avec une résistance, l'ensemble des commutateurs et de la résistance est monté en parallèle aux bornes des éléments électrochimiques, et la grille du transistor de commande est reliée entre ladite résistance et les dits capteurs.

L'invention concerne aussi un procédé de protection contre les dysfonctionnements d'un module pour batterie selon la revendication 11.

De préférence, le transistor est commandé par le capteur si le dysfonctionnement persiste après une période de temporisation

D'autres caractéristiques et avantages de l'invention apparaîtront à la lecture de la description qui suit de modes de réalisation de l'invention, donnée à titre d'exemple et en référence aux dessins annexés qui montrent:
- figure 1 une représentation schématique d'un module selon un premier mode de réalisation de l'invention;
- figure 2 une représentation schématique d'un module selon un autre mode de réalisation de l'invention.

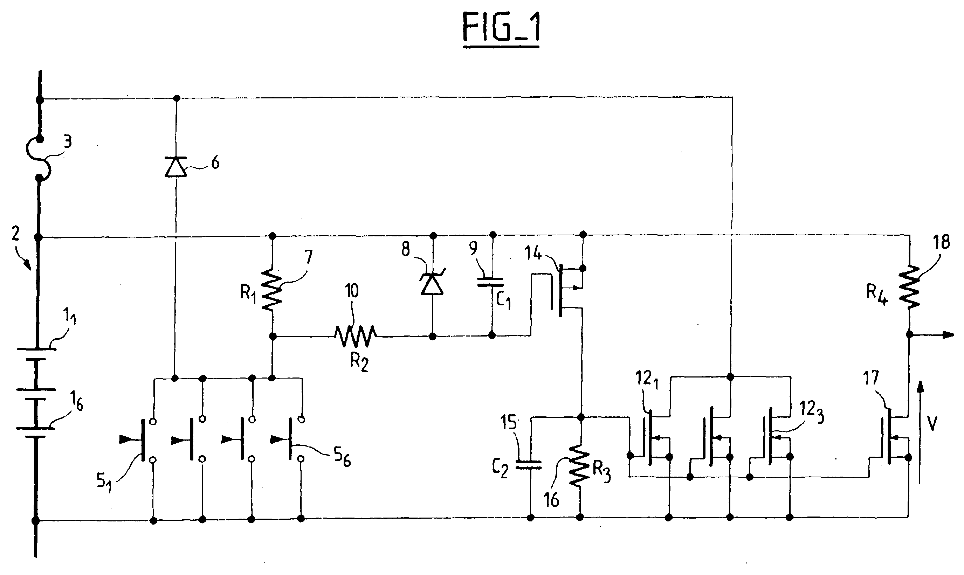

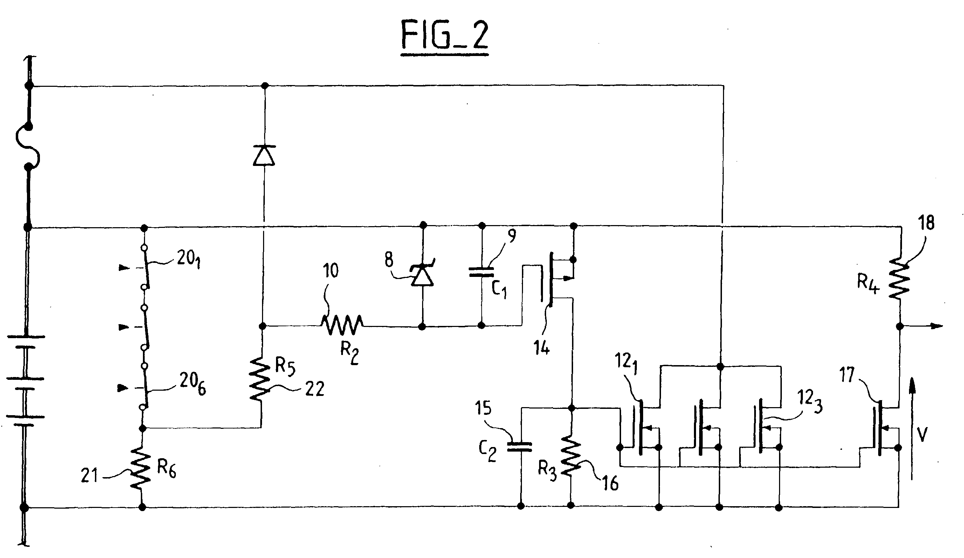

La figure 1 montre une représentation schématique d'un module selon l'invention. Un tel module est destiné à être assemblé en série avec d'autres modules sur une ligne de puissance, pour former une batterie. L'invention propose une protection contre les différents dysfonctionnements possibles dans les différents éléments électrochimiques du module. Dans ce mode de réalisation, comme dans celui de la figure 2, on protège les éléments électrochimiques en les isolant en cas de dysfonctionnements; toutefois, le module reste électriquement conducteur, avant, pendant ou après le fonctionnement du système de sécurité.

Le module de la figure 1 est formé de plusieurs éléments électrochimiques - six éléments 1₁ à 1₆ dans le cas de la figure - qui sont montés en trois groupes en série sur une ligne de puissance 2, chaque groupe comprenant deux éléments en parallèle. Un fusible 3 est monté en série avec les éléments, sur la ligne de puissance 2. Dans au moins un élément, on peut prévoir un pressostat, formé d'un détecteur de pression non représenté, qui commande la fermeture d'un commutateur; dans le mode de réalisation de la figure 1, chaque élément est pourvu d'un pressostat; les commutateurs 5₁ à 5₆ de chacun des pressostats sont montés en parallèle et sont normalement ouverts lorsque la pression dans les éléments électrochimiques est inférieure à la pression de sécurité. Chacun des commutateurs 5₁ à 5₆ se ferme lorsque la pression dépasse la pression de sécurité dans l'élément électrochimique correspondant.

Le montage en parallèle des commutateurs est monté en série avec une diode 6; l'ensemble de la diode et des commutateurs est monté en parallèle aux bornes du montage série des éléments électrochimiques et du fusible. La cathode de la diode est du côté du fusible dans le cas de la figure, où le fusible est du côté plus du module.

Le montage de la figure 1 comprend encore une résistance R₁ référencée 7, reliée d'une part comme la diode 6 aux bornes du montage en parallèle des commutateurs, et d'autre part à la ligne de puissance 2 entre les éléments électrochimiques et le fusible.

Une diode Zener 8 en parallèle avec un condensateur 9 d'une capacité C₁ est montée en série avec une résistance R₂ référencée 10 sur la figure. L'anode de la diode est reliée à la grille du transistor de commande, dans le cas de la figure où celui-ci est un MOS P.

Un ensemble de plusieurs transistors de puissance 12₁ à 12ₙ, avec n=3 dans le cas de la figure, montés en parallèle, est monté en parallèle aux bornes du montage série des éléments électrochimiques et du fusible. On a prévu plusieurs transistors dans le mode de réalisation de la figure; on aurait aussi pu aussi ne prévoir qu'un seul transistor. Dans le mode de réalisation de la figure, on utilise des transistors MOS de type N, qui présentent une faible résistance série.

Aux bornes des éléments électrochimiques est monté en parallèle un montage série d'un transistor de commande 14 et du montage en parallèle d'un condensateur 15 de capacité C₂ et d'une résistance R₃ référencée 16. Le transistor de commande est par exemple un transistor MOS de type P.

La grille du transistor de commande 14 est reliée entre la résistance R₂ 10 et la diode Zener 8. Les grilles des transistors de puissance 12₁ à 12ₙ sont reliées entre le transistor 14 et le montage en parallèle C₂R₃.

Le montage comprend enfin une partie de dérivation d'une information pour la surveillance électronique des modules; cette partie comprend un transistor d'information 17 en série avec une résistance R₄ référencée 18; l'ensemble est monté en parallèle aux bornes des éléments électrochimiques. La grille du transistor est reliée comme la grille des transistors de puissance entre le transistor 14 et le montage en parallèle C₂R₃. Entre le transistor d'information 17 et la résistance R₄, on dispose d'un potentiel, dont la différence V avec le potentiel à la borne négative des éléments électrochimiques est représentative de la tension aux bornes du module.

Les valeurs possibles des différents composants du montage sont les suivantes:
R₁ = 10 kΩ;
R₂ = 1 MΩ;
C₁ = 0,1 µF;
R₃ = 100 kΩ;
C₂ = 10 nF;
R₄ = 100 kΩ;

Le fonctionnement du montage de la figure 1 est le suivant. En régime de fonctionnement normal des éléments électrochimiques, les commutateurs 5₁ à 5₆ sont ouverts, et les transistors 12, 17 sont bloqués. La tension V de surveillance est égale à la tension du module, le transistor d'information 17 étant bloqué, comme les transistors de puissance.

Si l'un des commutateurs se ferme, du fait d'une pression excessive dans un des éléments électrochimiques, le condensateur C₁ 9 est chargé, à travers la résistance R₂ 10, et le transistor de commande 14 est rendu conducteur. Le condensateur 9 agit donc comme temporisateur de l'application à la grille du transistor de commande d'une tension le rendant passant. Le choix de la capacité C₁ et de la résistance R₂ permet une temporisation à la mise en court-circuit du module. On peut ainsi éviter de commander le système sur des signaux parasites. La diode Zener 8 a pour fonction de limiter la tension appliquée à la grille du transistor de commande, de sorte à le protéger.

Du fait que le transistor de commande 14 devient passant, le condensateur 15 C₂ est chargé; les transistors de puissance 12₁ à 12ₙ, comme le transistor d'information 17 sont rendu passants. Le module est court-circuité, de telle sorte que le fusible 3 fond, et isole les éléments électrochimiques.

Le transistor d'information étant passant, la tension V d'information est représentative de la tension fournie par le module.

La diode 6 assure la mémorisation de l'état du système. De fait, tant que l'un au moins des commutateurs reste fermé, il subsiste une tension aux bornes de la résistance 7 R₁, et donc aux bornes du transistor de commande 14, ce qui assure que le transistor de commande reste passant, et que les transistors de puissance restent aussi passants.

Si la pression dans les éléments électrochimiques redescend, et que les commutateurs s'ouvrent, la diode 6 D₁ assure que subsiste aux bornes de la résistance 7 R₁ une tension égale à la différence entre la tension des éléments électrochimiques et la tension de seuil de la diode. Du fait de cette tension, le transistor de commande reste passant, et les transistors de puissance aussi.

La diode assure ainsi une fonction de mémorisation du dysfonctionnement, même si celui-ci ne subsiste pas. Cette fonction est assurée par le branchement de la diode, d'une part à une borne du module complet, du côté qui est isolé des éléments électrochimiques par le fusible lorsqu'il fond, et d'autre part aux bornes des commutateurs. Ainsi, la diode est branchée de sorte à assurer que le transistor de commande reste conducteur, même après que le dysfonctionnement a cessé.

Dans le montage de la figure 1, comme d'ailleurs dans celui de la figure 2, la cathode de la diode est reliée sur le drain des transistors de puissance, tandis que l'anode est reliée de sorte à alimenter la grille du transistor de commande, à travers la résistance R₂. Il est possible de monter la diode autrement, notamment si le fusible n'est pas monté du côté positif des éléments électrochimiques, comme sur la figure, mais du côté négatif. Dans ce cas, l'anode de la diode serait branchée à la borne du module côté moins, du côté du fusible.

Dans un cas comme dans l'autre, la diode assure que la tension des éléments électrochimiques alimente la grille du transistor de commande, quel que soit l'état ultérieur du capteur, et des commutateurs.

L'invention assure ainsi une protection des éléments électrochimiques, sans augmenter la résistance interne du module en fonctionnement normal; de fait, seul le fusible, en fonctionnement normal, est ajouté sur la ligne de puissance, et il présente une résistance faible devant la résistance des éléments.

En outre, les transistors de puissance, lorsqu'ils se ferment, ne sont soumis qu'à la tension des éléments qu'ils isolent, et non pas à la tension de l'ensemble de la batterie; l'invention assure ainsi une protection des transistors de puissance, quel que soit le nombre de modules formant la batterie, et donc quelle que soit la tension de cette dernière. De même, le fusible, lors de son ouverture, n'est soumis qu'à la tension des éléments du module; dans un cas comme dans l'autre, on évite les phénomènes d'arcs électriques. On peut aisément adapter le système par le choix du fusible.

Après isolation des éléments électrochimiques, le module de l'invention reste conducteur, avec une résistance égale à la résistance des transistors de puissance. Cette résistance est faible, notamment dans le cas de transistors MOS de type N.

Par ailleurs, les différents composants du circuit de l'invention sont alimentés par les éléments électrochimiques du module. L'invention fournit donc une solution autonome, indépendante de toute alimentation externe.

La figure 2 montre un autre mode de réalisation de l'invention. Dans le mode de réalisation de la figure 2 sont utilisés des commutateurs qui en fonctionnement normal des éléments électrochimiques sont fermés, et qui s'ouvrent en cas de dysfonctionnement.

Le montage de la figure 2 est identique à celui de la figure 1, à l'exception du montage de la résistance R₁ et des commutateurs 5₁ à 5₆. Les commutateurs 20₁ à 20₆ qui en fonctionnement normal des éléments électrochimiques sont fermés, sont montés en série. L'ensemble série des commutateurs, en série avec une résistance R₆, référencée 21 sur la figure, est monté aux bornes des éléments électrochimiques. Une résistance R₅ référencée 22 est reliée d'une part entre les commutateurs 20₁ à 20₆ et la résistance R₆ et d'autre part à l'anode de la diode 6.

Le reste du montage - diode Zener 8, condensateur 9 C₁, transistor de commande 14, condensateur C₂ 15, résistance R₃ 16, transistors de puissance, transistor 18 et résistance R₄ est identique au montage de la figure 1.

Des valeurs possibles des résistances R₅ et R₆ sont les suivantes:
R₅ = 10 kΩ;
R₆ = 100 kΩ;

Le fonctionnement du circuit de la figure 2 est le suivant; en fonctionnement normal, les commutateurs 20₁ à 20₆ sont fermés et la tension aux bornes du condensateur 9 est nulle, de sorte que le transistor de commande 14 est bloqué, et que les transistors de puissance comme le transistor d'information 18 sont bloqués.

En cas de dysfonctionnement, dès que la pression dans l'un des éléments électrochimiques dépasse la valeur de sécurité, le commutateur correspondant s'ouvre. Le condensateur C₁ est chargé à travers les résistances R₆, R₅ et R₂, et le transistor de commande 14 devient passant. Comme dans le montage de la figure 1, le condensateur C₁ permet une temporisation à la mise en court-circuit du module.

En conséquence, le condensateur C₂ est chargé, et les transistors de puissance deviennent passant, de même que le transistor 17. Le fusible et les éléments électrochimiques sont mis en court-circuit, et le fusible fond en isolant les éléments électrochimiques. Comme dans le montage de la figure 1, les éléments électrochimiques sont isolés, mais le module reste conducteur à travers les transistors du puissance.

En outre, même si le dysfonctionnement cesse, et que les commutateurs se referment, la tension des éléments électrochimiques alimente le condensateur C₁ et la grille du transistor de commande, à travers les transistors de puissance, la diode 6 et la résistance R₂. Comme dans le montage de la figure 1, une tension égale à la tension aux bornes des éléments électrochimiques reste appliquée au condensateur et à la grille du transistor de commande.

La diode assure ainsi la même fonction de mémorisation que dans le montage de la figure 1.

Les circuits des figures 1 et 2 peuvent aisément être fabriqués par l'homme du métier, par exemple à l'aide de composants classiques. L'ensemble peut alors être monté dans le capot des éléments électrochimiques.

Dans les exemples des figures 1 et 2, on a considéré des commutateurs commandés par des capteurs de pression installés un ou plusieurs des éléments électrochimiques de la batterie. L'invention s'applique aussi à d'autres types de capteurs, comme par exemple des capteurs de température, ou des capteurs de tension aux bornes des différentes éléments électrochimiques.

Pour des capteurs de tension, on peut ainsi prévoir un comparateur permettant de comparer la tension aux bornes de chacun des éléments avec une valeur de consigne; les comparateurs sont suivis d'une fonction logique déterminant si l'une au moins des tensions est supérieure à la valeur de consigne. Si tel est le cas, on applique une tension à la grille du transistor de commande, comme expliqué en référence aux figures. Ce mode de réalisation permet de surveiller les tensions aux bornes de chacun des éléments électrochimiques.

On pourrait aussi combiner ce mode de réalisation avec le mode de réalisation d'une des figures, de sorte à détecter les dysfonctionnements non seulement grâce à la pression régnant dans les modules, mais en même temps grâce à la tension aux bornes des éléments électrochimiques.

L'invention s'applique notamment pour les véhicules électriques, et tout particulièrement aux éléments Li-ion, pour les générateurs secondaires destinés à de tels véhicules. On utilise de préférence un couple électrochimique Li-ion, et des électrodes planes ou spiralées, i. e. des éléments prismatiques ou cylindriques. L'invention s'applique par exemple à la protection d'un module formé de six éléments cylindriques. Dans les modes de réalisation décrits, et en particulier dans l'application aux véhicules électriques, le module reste conducteur après que les commutateurs se sont fermés ou ouverts pour fermer les transistors de puissance et faire fondre le fusible. On assure de la sorte grâce à la diode une fonction de mémorisation et le module reste conducteur, dès que les capteurs ont détecté un dysfonctionnement, et quel que soit l'état ultérieur des éléments.
Bien entendu, la présente invention n'est pas limitée aux exemples et modes de réalisation décrits et représentés, mais elle est susceptible de nombreuses variantes accessibles à l'homme de l'art. On pourrait ainsi utiliser à la place des transistors de puissance représentés sur les figures des thyristors, IGBT ou autres éléments couverts par l'expression "transistors de puissance". On a donné dans la description l'exemple d'un fusible; on pourrait aussi utiliser un disjoncteur, ou tout autre organe de coupure.
En outre, il est clair que la partie d'information - transistor 17 et résistance 18 - peut être omise du montage des figures 1 et 2, sans nuire au bon fonctionnement du montage. Il en est de même de la diode Zener; il en est encore de même de la résistance 10 et du condensateur 9, si la fonction de temporisation n'est pas utile. On pourrait aussi supprimer le condensateur 15.

## Revendications

1. Un module pour batterie, comprenant des éléments électrochimiques (1₁-1₆) au moins un capteur, un organe de coupure (3) monté en série avec les éléments électrochimiques, et un interrupteur électronique comprenant
- au moins un transistor de puissance (12₁ - 12₃) court-circuitant le montage série des éléments électrochimiques et de l'organe de coupure lorsqu'un dysfonctionnement est capté par le(s) capteur(s);
- un transistor de commande (14), commandant la fermeture du (des) transistor(s) de puissance lorsqu'un dysfonctionnement est capté par le(s) capteur(s),
- une diode (6) montée en série avec une résistance (7, 22) aux bornes de l'organe de coupure (3) et assurant que le(s) transistor(s) de puissance maintient (maintiennent) le montage série en court-circuit quel que soit l'état ultérieur du (des) capteur(s), la diode étant reliée d'une part à l'organe de coupure, du côté opposé aux éléments électrochimiques, et d'autre part à la grille du transistor de commande de sorte à alimenter la grille du transistor de commande par la tension des éléments électrochimiques lorsque le(s) transistor(s) de puissance est (sont) fermé(s).

2. Le module selon la revendication 1, **caractérisé en ce que** ce que la diode est reliée à la grille du transistor de commande par l'intermédiaire d'une résistance (10).

3. Le module selon la revendication 1 ou 2, **caractérisé par** un condensateur (9) retardant l'application d'une tension à la grille du transistor de commande.

4. Le module selon l'une des revendications 1 à 3, **caractérisé par** une diode Zener (8) limitant la tension appliquée à la grille du transistor de commande.

5. Le module selon l'une des revendications 1 à 4, **caractérisé en ce que** ce que le(s) capteur(s) comprend (comprennent) un pressostat.

6. Le module selon l'une des revendications 1 à 5, **caractérisé en ce que** ce que le(s) capteur(s) comprend (comprennent) un pressostat pour chaque élément électrochimique.

7. Le module selon l'une des revendications 1 à 6, **caractérisé en ce que** le(s) capteur(s) comprend (comprennent) un capteur de surtension.

8. Le module selon l'une des revendications 1 à 7, **caractérisé en ce que** le(s) capteur(s) comprend (comprennent) un capteur de surtension aux bornes de chaque élément électrochimique.

9. Le module selon l'une des revendications 1 à 8, **caractérisé en ce que** le(s) capteur(s) command(ent) des commutateurs (5₁ - 5₆) ouverts en fonctionnement normal des éléments électrochimiques, montés en parallèle, **en ce que** le montage série de la résistance (7) et des commutateurs est monté en parallèle aux bornes des éléments électrochimiques, et **en ce que** la grille du transistor de commande (14) est reliée entre ladite résistance et ledit (lesdits) capteur(s).

10. Le module selon l'une des revendications 1 à 8, **caractérisé en ce que** le(s) capteur(s) command(ent) des commutateurs (20₁- 20₆) fermés en fonctionnement normal des éléments électrochimiques, montés en série avec une résistance (21), **en ce que** l'ensemble des commutateurs et de la résistance est monté en parallèle aux bornes des éléments électrochimiques, et **en ce que** la grille du transistor de commande (14) est reliée entre ladite résistance et ledit (lesdits) capteur(s).

11. Procédé de protection contre les dysfonctionnement d'un module pour batterie comprenant des éléments électrochimiques (1₁ -1₆) montés en série avec un organe de coupure (3), au moins un capteur et au moins un transistor de puissance (12₁-12₃) commandé par ledit (lesdits) capteur (s), le procédé comprenant
- la commande de la fermeture du (des) transistor(s) de puissance par un transistor de commande (14) lorsque le(s) capteur(s) détecte(nt) un dysfonctionnement, le(s) transistor(s) de puissance court-circuitant alors le montage série des éléments électrochimique et de l'organe de coupure;
- le maintien du (des) transistor(s) de puissance à l'état fermé, quel que soit l'état ultérieur du (des) capteur(s), à l'aide d'une diode montée en série avec une résistance (7, 22) aux bornes de l'organe de coupure (3) et reliée d'une part à l'organe de coupure, du côté opposé aux éléments électrochimiques, et d'autre part à la grille du transistor de commande de sorte à alimenter la grille du transistor de commande par la tension des éléments électrochimiques lorsque le(s) transistor(s) de puissance est (sont) fermé(s).

12. Le procédé selon la revendication 11, **caractérisé en ce que** le transistor est commandé par le(s) capteur(s) si le dysfonctionnement persiste après une période de temporisation.

## Claims

1. A battery module comprising cells (1₁ - 1₆), at least one sensor, an interrupter device (3) connected in series with the cells and an electronic switch including:
- at least one power transistor (12₁ - 12₃) for short circuiting the series-connected cells and the interrupter device if the sensor senses a malfunction,
- a control transistor (14) for turning on the power transistor if the sensor senses a malfunction,
- a diode (6) for assuring that the power transistors maintain the series-connected circuit short circuited regardless of the subsequent status of the sensor, the diode being connected firstly to the interrupter device at the opposite side thereof to the cells and secondly to gate of the control transistor, whereby the diode is adapted to apply the voltage of the cells to the gate of the control transistor if the power transistors are turned on.

2. The module according to claim 1, **characterized in that** the diode is connected to the gate of the control transistor via a resistor (10).

3. The module according to claim 1 or 2, **characterized by** a capacitor (9) for delaying application of a voltage to the gate of the control transistor.

4. The module according to one of claims 1 to 3, **characterized by** a zener diode (8) for limiting the voltage applied to the gate of the control transistor.

5. The module according to one of claims 1 to 4, **characterized in that** the sensors include a pressure-sensitive switch.

6. The module according to one of claims 1 to 5, **characterized in that** the sensors include a pressure-sensitive switch for each cell.

7. The module according to one of claims 1 to 6, **characterized in that** the sensors include an overvoltage sensor.

8. The module according to one of claims 1 to 7, **characterized in that** the sensors include a sensor responsive to overvoltages at the terminals of each cell.

9. The module according to one of claims 1 to 8, **characterized in that** the sensors control switches (5₁ - 5₆) which are connected in parallel and are open when the cells are operating normally, **in that** the series-connected combination of a resistor (7) and the switches shunts the terminals of the cells, and **in that** the gate (14) of the control transistor is connected between said resistor and said sensors.

10. The module according to one of claims 1 to 8, **characterized in that** the sensors control switches (20₁ - 20₆) which are connected in series with a resistor (7) and are closed when the cells are operating normally, wherein the switches and the resistor together shunt the terminals of the cells, and **in that** the gate of the control transistor (14) is connected between said resistor and said sensors.

11. Method of protecting against malfunctions a battery module including cells (1₁ - 1₆) connected in series with an interrupter device (3), at least one sensor and at least one power transistor (12₁ - 12₃) controlled by said sensor, in which method:
- if the sensor detects a_malfunction it turns the power transistor on via a control transistor (14), the power transistor then short-circuiting the series-connected circuit made up of the cells and the interrupter device, and
- the power transistor is kept in the on state regardless of the subsequent status of the sensor, by means of a diode connected firstly to the interrupter device at the opposite side thereof to the cells and secondly to the gate of the control transistor, whereby the diode is adapted to apply the voltage of the cells to the gate of the control transistor if the power transistors are turned on.

12. The method according to claim 11, **characterized in that** the sensor operates the transistor if the malfunction continues after a time-delay.

## Patentansprüche

1. Batteriemodul, umfassend galvanische Elemente (1₁ bis 1₆), wenigstens einen Sensor, eine Unterbrechungsvorrichtung (3), in Serie geschaltet mit den galvanischen Elementen, und einen elektronischen Schalter, umfassend
- wenigstens einen Leistungstransistor (12₁ bis 12₃), welcher die Serienschaltung der galvanischen Elemente und der Unterbrechungsvorrichtung kurzschließt, wenn eine Funktionsstörung durch den/die Sensor(en) erfasst wird;
- einen Steuertransistor (14), welcher das Einschalten des/der Leistungstransistors/-transistoren steuert, wenn eine Funktionsstörung durch den/die Sensor(en) erfasst wird;
- eine Diode (6), welche mit einem Widerstand (7, 22) in Serie geschaltet ist, an den Anschlüssen der Unterbrechungsvorrichtung (3), und welche sicherstellt, dass der/die Leistungstransistor(en) die Serienschaltung überbrückt hält/halten, unabhängig von dem darauffolgenden Zustand des/der Sensors/Sensoren, wobei die Diode einerseits mit der Unterbrechungsvorrichtung, auf der Seite gegenüber den galvanischen Elementen, und andererseits mit dem Gate des Steuertransistors, verbunden ist, derart, dass sie das Gate des Steuertransistors mit der Spannung der galvanischen Elemente versorgt, wenn der/die Leistungstransistor(en) eingeschaltet ist/sind.

2. Modul nach Anspruch 1, **dadurch gekennzeichnet, dass** die Diode mit dem Gate des Steuertransistors über einen dazwischenliegenden Widerstand (10) verbunden ist.

3. Modul nach Anspruch 1 oder 2, **gekennzeichnet durch** einen Kondensator (9), welcher das Anlegen einer Spannung an das Gate des Steuertransistors verzögert.

4. Modul nach einem der Ansprüche 1 bis 3, **gekennzeichnet durch** eine Zener-Diode (8), welche die Spannung, die an das Gate des Steuertransistors angelegt ist, begrenzt.

5. Modul nach einem der Ansprüche 1 bis 4, **dadurch gekennzeichnet, dass** der/die Sensor(en) einen Druckschalter umfasst/umfassen.

6. Modul nach einem der Ansprüche 1 bis 5, **dadurch gekennzeichnet, dass** der/die Sensor(en) einen Druckschalter für jedes galvanische Element umfasst/umfassen.

7. Modul nach einem der Ansprüche 1 bis 6, **dadurch gekennzeichnet, dass** der/die Sensor(en) einen Überspannungssensor umfasst/umfassen.

8. Modul nach einem der Ansprüche 1 bis 7, **dadurch gekennzeichnet, dass** der/die Sensor(en) einen Überspannungssensor an den Anschlüssen jedes galvanischen Elements umfasst/umfassen.

9. Modul nach einem der Ansprüche 1 bis 8, **dadurch gekennzeichnet, dass** der/die Sensor(en) Schalter (5₁ bis 5₆) steuert/steuern, welche bei normalem Betrieb der galvanischen Elemente geöffnet sind, wobei sie parallel geschaltet sind, dadurch, dass die Serienschaltung des Widerstands (7) und der Schalter an den Anschlüssen der galvanischen Elemente parallel geschaltet ist, und dadurch, dass das Gate des Steuertransistors (14) zwischen dem Widerstand und dem/den Sensor(en) verbunden ist.

10. Modul nach einem der Ansprüche 1 bis 8, **dadurch gekennzeichnet, dass** der/die Sensor(en) Schalter (20₁ bis 20₆) steuert/steuern, welche bei normalem Betrieb der galvanischen Elemente geschlossen sind, wobei sie mit einem Widerstand (21) in Serie geschaltet sind, dadurch, dass die Einheit der Schalter und des Widerstands an den Anschlüssen der galvanischen Elemente parallel geschaltet ist, und dadurch, dass das Gate des Steuertransistors (14) zwischen dem Widerstand und dem/den Sensor(en) verbunden ist.

11. Verfahren zum Schützen gegen Funktionsstörungen, für ein Batteriemodul, umfassend galvanische Elemente (1₁ bis 1₆), welche mit einer Unterbrechungsvorrichtung (3) in Serie geschaltet sind, wenigstens einen Sensor und wenigstens einen Leistungstransistor (12₁ bis 12₃), welcher durch den/die Sensor(en) gesteuert ist, wobei das Verfahren umfasst:
- Steuern des Einschaltens des/der Leistungstransistors/-transistoren durch einen Steuertransistor (14), wenn der/die Sensor(en) eine Funktionsstörung detektiert/detektieren, wobei der/die Leistungstransistor(en) dann die Serienschaltung der galvanischen Elemente und der Unterbrechungsvorrichtung kurzschließt/kurzschließen;.
- Halten des/der Leistungstransistors/-transistoren im eingeschalteten Zustand, unabhängig von dem darauffolgenden Zustand des/der Sensors/Sensoren, mit Hilfe einer Diode, welche mit einem Widerstand (7, 22) in Serie geschaltet ist, an den Anschlüssen der Unterbrechungsvorrichtung (3), und einerseits mit der Unterbrechungsvorrichtung, an der Seite gegenüber den galvanischen Elementen, andererseits mit dem Gate des Steuertransistors, verbunden ist, derart, dass sie das Gate des Steuertransistors mit der Spannung der galvanischen Elemente versorgt, wenn der/die Leistungstransistor(en) eingeschaltet ist/sind.

12. Verfahren nach Anspruch 11, **dadurch gekennzeichnet, dass** der Transistor durch den/die Sensor(en) gesteuert wird, falls die Funktionsstörung nach einer Zeit der Verzögerung fortbesteht.
